# EUROPEAN PATENT APPLICATION

(11) **EP 1 959 340 A2**
(43) Date of publication of application: **20.08.2008**
(21) Application number: 08151455.6
(22) Date of filing: 14.02.2008
(51) Int. Cl.: G06F 3/12

(54) **Information processing apparatus and control method thereof**

(30) Priority: 16.02.2007 JP 2007036809
(71) Applicant: Canon Kabushiki Kaisha, Ohta-Ku, Tokyo 146-8501 (JP)
(72) Inventor: Fukudome, Naobumi c/o CANON KABUSHIKI KAISHA, Tokyo Tokyo 146-8501 (JP)
(74) Representative: TBK-Patent

(57) **Abstract**

In a print log management system including a client which generates log information, printing prioritized processing or log-recording prioritized processing is switched in accordance with network performance. A driver agent transmits job log 1 to a server to time the response time, and compares the obtained response time with threshold value 1. If the response time is equal to or longer than threshold value 1, printing performance is prioritized and the control is switched to process 3, in which log information is transmitted after the printing is completed. If the response time of job log 1 is less than threshold value 1 and content log transmission speed is equal to or higher than threshold value 2, the control is switched to process 2 in which only job log 1 is transmitted before printing is executed. If the content log transmission speed is less than threshold value 2, the control is switched to process 1 in which the content log of the print data is transmitted each time a page is outputted.

## Description

### BACKGROUND OF THE INVENTION

### Field of the Invention

The present invention relates to a print log management system, comprising an information processing apparatus, e.g., a personal computer, and a printing apparatus, e.g., a printer, which enables tracking of an outputted print job.

### Description of the Related Art

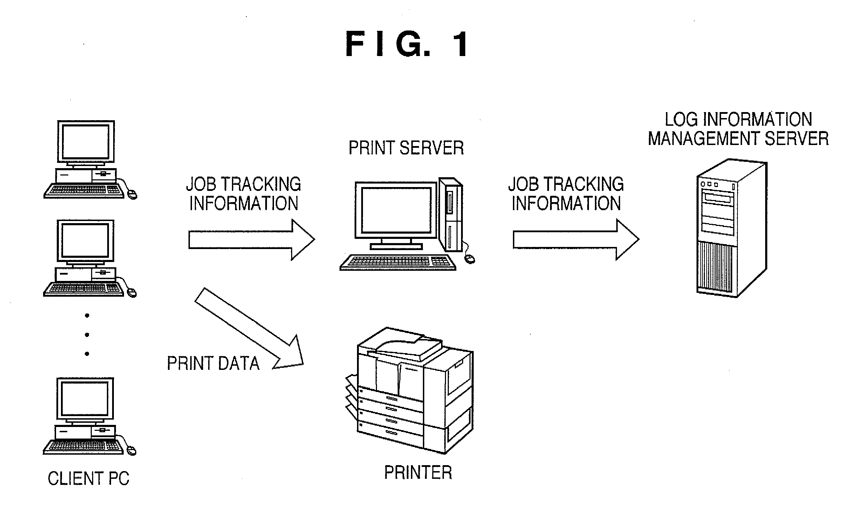

Conventionally the following job history management systems have been provided. For instance, there has been a system which accumulates, in a print server, job information consisting of log information and print data outputted from a printer by a user, and tracks the job content based on the log information when an information leak occurs (Japanese Patent Laid-Open No. 2002-149371 and No. 2004-118243). Furthermore, as shown in Fig. 1, there has been a system which extracts job information by a client PC and accumulates the information in a log information management server (also referred to as a job information management server) provided separately through a print server (will be referred to as Method 3).

The system configurations of the foregoing methods disclosed in Japanese Patent Laid-Open No. 2002-149371 and No. 2004-118243 as well as Method 3 all require a print server.

However, increasing users are structuring their printing systems without a print server in order to reduce the cost for management and initial installation. In order to enable job information tracking in such user environment, it is necessary to directly transmit job information extracted by the client PC to a log information management server. However, if the system is configured in this manner, power-off of the client PC could happen at any time unlike a print server. Moreover, there may be cases that job information transmission takes time, such as a case where the client PC and log information management server are separately based. Taking these things into consideration, it is necessary to configure a system which enables tracking of a print job content without impairing the user's convenience.

### SUMMARY OF THE INVENTION

The present invention has been made in view of the above-described conventional art. The present invention provides an information processing apparatus and control method thereof, which can prevent failure of log information recording without impairing the user's convenience, by switching the timing of log information transmission to a log information management server in accordance with the communication state and user's right.

In order to solve the above-described problems, the present invention has the following configuration. More specifically, the present invention provides an apparatus as specified in claims 1 to 6.

According to another aspect of the present invention, the present invention provides a method as specified in claims 7 to 10.

According to still another aspect of the present invention, the present invention provides a program as specified in claim 11.

According to the present invention, by virtue of switching the timing of log information transmission to a log information management server in accordance with the communication state and user's right, it is possible to prevent failure of log information recording without impairing the user's convenience.

Further features of the present invention will become apparent from the following description of exemplary embodiments with reference to the attached drawings.

### BRIEF DESCRIPTION OF THE DRAWINGS

Fig. 1 is a view showing a conventional system configuration;

Fig. 2 is a view showing a system configuration not having a print server;

Fig. 3 is a block diagram showing a configuration of a log information management system;

Fig. 4 is a block diagram showing a hardware configuration of client PC 11 and log information management server 13 in the system;

Fig. 5 is a view showing a structure of a software module operating in the client PC 11 of the system;

Fig. 6 is a view showing a structure of a software module operating in the log information management server;

Fig. 7 is a view showing an example of job tracking information extracted in the client PC;

Fig. 8 is a flowchart of print processing where accumulation of job tracking information is prioritized;

Fig. 9 is a flowchart of print processing where accumulation of partial job tracking information is prioritized;

Fig. 10 is a flowchart of print processing where printing performance is prioritized;

Fig. 11 is flowchart 1 for automatic process switching; and

Fig. 12 is flowchart 2 for automatic process switching.

### DESCRIPTION OF THE EMBODIMENTS

Preferred embodiments of the present invention will now be described in detail in accordance with the accompanying drawings.

### [First Embodiment]

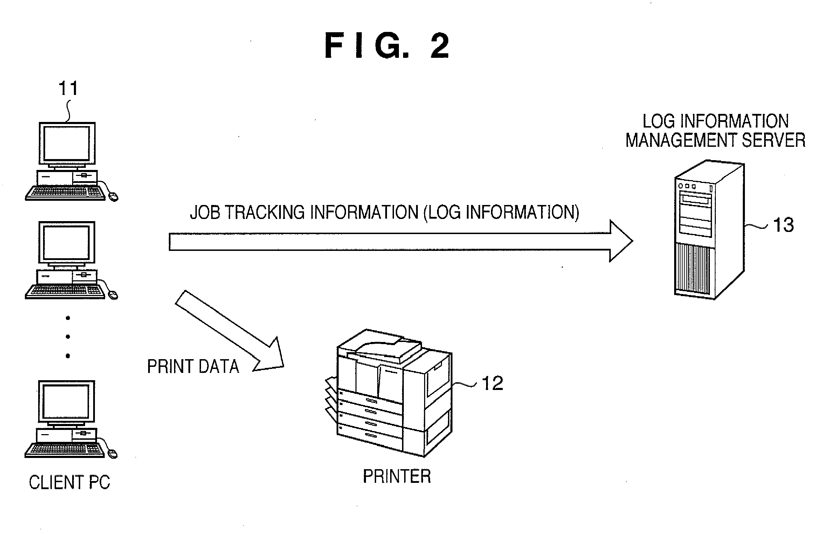

Fig. 2 shows a configuration of a log information management system according to the present embodiment. A client PC 11 is an information processing apparatus which generates print data to be transmitted to a printer 12 based on print target data, e.g., a document provided at the time of printing. In other words, the client PC 11 is a print job originator. Also, the client PC 11 generates log information based on user information, information regarding the client PC, and the generated print data, and transmits the log information to a log information management server 13 (also referred to as a job information management server). In other words, the client PC 11 serves as a log generator. The job tracking information, that is log information, is recorded in the log information management server 13 or in a database that exists in the back-end of the server 13, and stored.

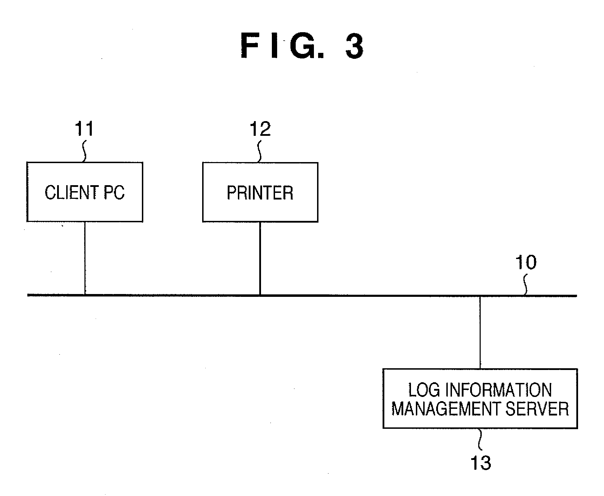

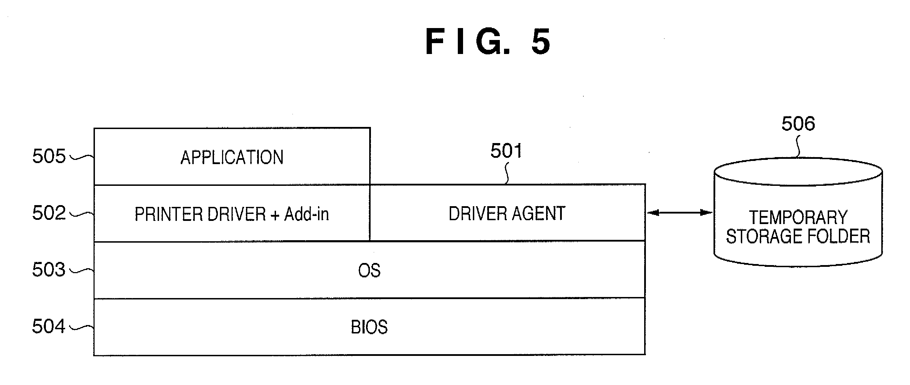

Fig. 3 is a block diagram showing a configuration of a log information management system according to the embodiment of the present invention. In the drawing, a network 10, e.g., a LAN, connects each of the constitutive elements. In the client PC 11, an application program (will also be referred to as an application) outputs a print instruction. In this stage, while the client PC 11 having a module construction shown in Fig. 5 outputs print data to the printer 12, the client PC 11 temporarily stores log information and transmits it to the log information management server 13. In response to the print instruction from the client PC, the printer 12 outputs the print data.

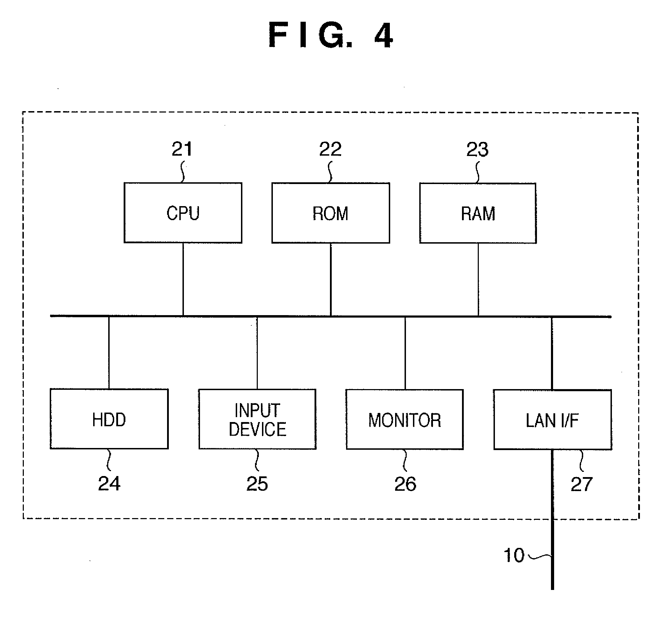

Fig. 4 is a block diagram showing a hardware configuration of the client PC 11 and log information management server 13 shown in Fig. 3. Since both are general-purpose PCs such as IBM-PC/AT compatible machines, only one block diagram is provided. The CPU 21 in the drawing directly or indirectly controls each of the devices (ROM, RAM or the like which will be described later) connected through an internal bus, and executes the program for realizing the present invention. ROM 22 stores basic software such as BIOS or the like. RAM 23 is used as a work area of the CPU 21 or as a temporary storage area for loading the program which realizes the present invention. A HDD 24 is a hard disk drive which stores the aforementioned program as a file. An input device 25 is used by an operator to operate the screen while the program is being run. A monitor 26 executes displaying for confirmation of the operation or the like. A LAN interface 27 is provided for network connection.

Fig. 5 shows structure of a software module operating in the client PC 11. Operating in the client PC 11 are a printer driver for the printer 12 and an add-in module (Add-in) 502 for job information extraction. Also, a driver agent 501 operates for temporarily storing job information transmitted from the add-in module and transmitting the job information to the log information management server 13. These software operate on the platform such as BIOS 504 or OS 503. The driver agent 501 stores the job tracking information, which has been transmitted from the add-in module of the printer driver, in a temporary storage folder 506 as a file. Note that the job tracking information includes: a user name which is a job owner, ID of the client PC, output document name, output date and time, data indicative of printed contents, number of pages, number of copies, completion state, and the like. The data indicative of printed contents includes the paper size and orientation, designation of single-sided or double-sided printing, color mode, contents being printed, and the like.

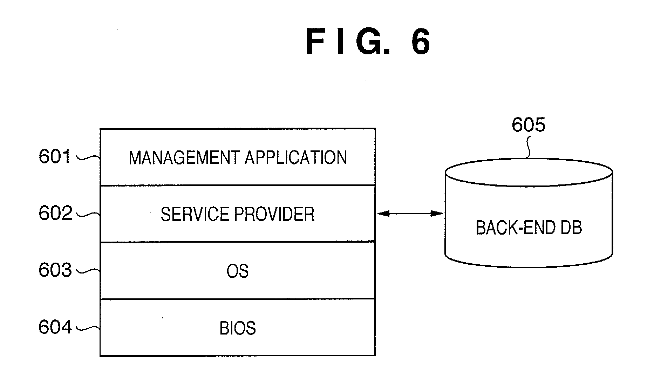

Fig. 6 shows a module structure of the log information management server 13. In the log information management server 13, a service provider 602 is operating on the platform such as BIOS 604 or OS 603 for receiving job information that has been transmitted from the driver agent 501 and accumulating the information in a back-end database (to be referred to as a back-end DB) 605. Also, a management application software 601 is operated. The management application software 601 performs management of the extracted information when the client PC 11 extracts job tracking information. For instance, the management application software 601 notifies the client of the information to be included in the job tracking information, e.g., whether or not to acquire texts only or texts and images for the printing content in the job tracking information, resolution of the images at the time, designated setting of color or black-and-white, state of each driver agent and the like. Note, for the back-end DB 605, a document management system or database can be used in combination in accordance with the number of printers or the number of jobs.

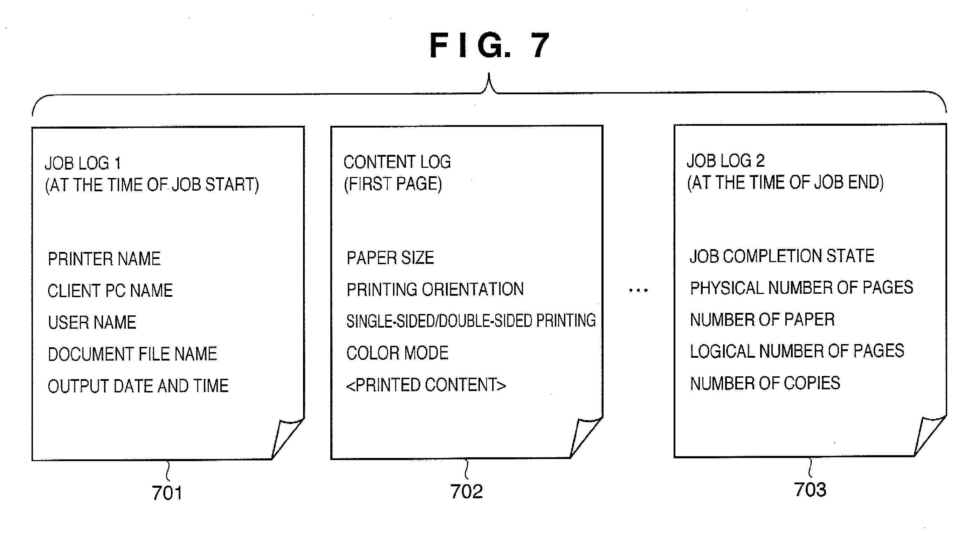

Fig. 7 shows an example of job log 1 (first job log information) 701, content log for each page (content log information) 702, and job log 2 (second job log information) 703 which are included in the job tracking information, that is, log information. These job information are transmitted from the client PC 11 to the log information management server 13 and accumulated in the back-end DB 605. As shown in the drawing, job tracking information is extracted separately, for the job log 1, content log for each page, and job log 2. In the log information management system according to the present embodiment, this is realized by executing print processing and job tracking information transmission at different timings.

For transmission of job tracking information from the driver agent of the client PC 11 to the log information management server 13, a known technique such as HTTP according to the TCP/IP or SOAP is used. Also, a known technique is used for the status collection for management of each driver agent status. Therefore, no particular explanation is given herein.

### <Printing and Log Information Recording Procedure>

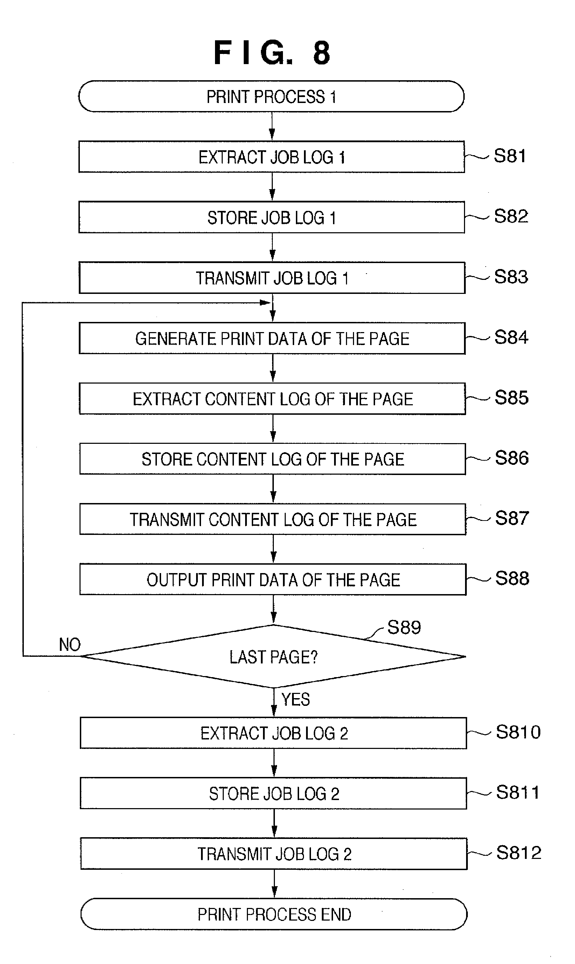

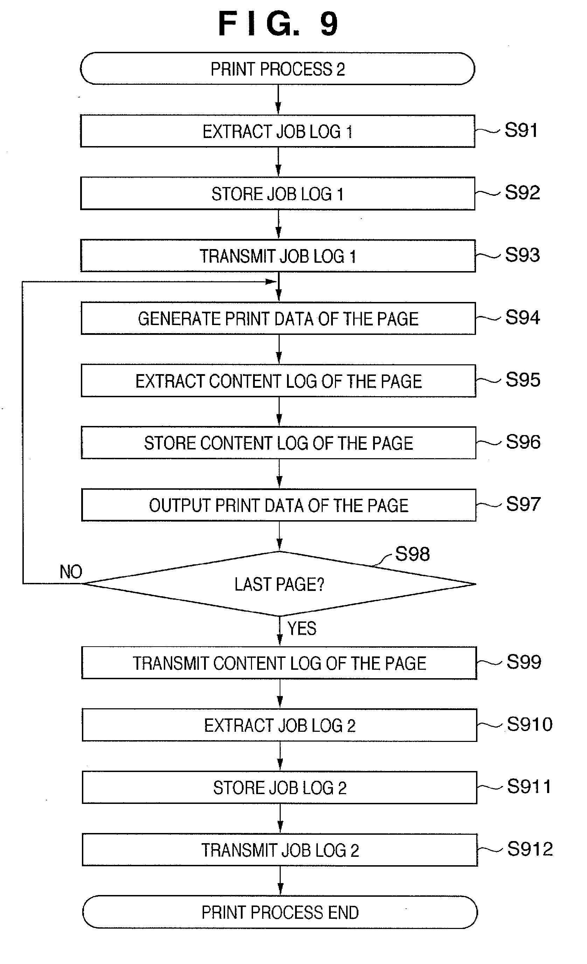

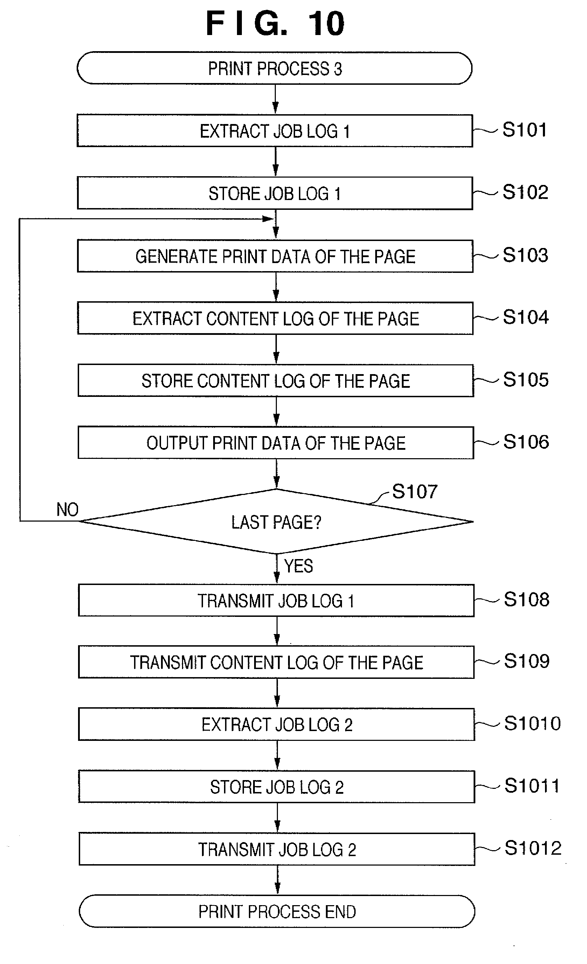

Fig. 8 is a flowchart showing a procedure of print processing (print process 1) where accumulation of job tracking information is prioritized. Fig. 9 is a flowchart showing a procedure of print processing (print process 2) where accumulation of partial job tracking information is prioritized. Fig. 10 is a flowchart showing a procedure of print processing (print process 3) where printing performance is prioritized. These processing are realized by executing the printer driver 502 including an add-in module (will simply be referred to as a printer driver) by the CPU.

In this embodiment, a user selects a print processing procedure from the print processes 1 to 3 in advance. The selection may be made by, for instance, selecting a process number on a user interface screen provided by the printer driver 502. When a user performs print operation using the application 505 in Fig. 5 on the client PC 11 in Fig. 3, the print processing starts. In this stage, the application stored as a file in the HDD 24 in Fig. 4 is loaded to the RAM 23 and operates under the control of CPU 21. The user can perform input operation by the input device 25 while looking at the monitor 26. The printer driver, add-in module and driver agent which operate during the print processing also operate under the control of the CPU 21. When the printer driver 502 receives a rendering command from the application 505, it refers to the process number selected by the user, and executes the processing shown in Fig. 8 in case of print process 1, the processing shown in Fig. 9 in case of print process 2, or the processing shown in Fig. 10 in case of print process 3. Next, the present invention is described with reference to Figs. 8, 9 and 10.

Fig. 8 shows print processing where accumulation of job tracking information is prioritized. In step S81 in Fig. 8, job log 1 is extracted by the printer driver 502 in accordance with a printing content that has been designated by the application. Although the extraction is executed by the add-in module, the description herein is provided as if the extraction is executed by the printer driver.

In step S82, the extracted job log 1 is transferred to the driver agent 501 and stored in the temporary storage folder 506 in Fig. 5 (in the HDD 24 in Fig. 4). In step S83, the stored job log 1 is immediately transmitted from the driver agent 501 to the log information management server 13 through the LAN I/F 27 in Fig. 4.

In step S84, the printer driver 502 generates print data of the first page. In step S85, the content log is extracted by the printer driver 502 in accordance with the print data of the first page. In step S86, the extracted content log is transferred to the driver agent 501 and stored in the temporary storage folder 506. In step S87, the stored content log is transmitted to the log information management server 13. After the content log transmission is completed, in step S88 the print data of the corresponding page is outputted to the printer 12. In step S89, it is determined whether or not the target page is the last page, and if not, the control returns to step S84. The processing from steps S84 to S89 are repeated, and when the determination in step S89 finds the last page, the control proceeds to step S810.

In step S810, job log 2 is extracted by the printer driver 502 in accordance with the print result. In step S811, the extracted job log 2 is transferred to the driver agent 501 and stored in the temporary storage folder 506. In step S812, the stored job log 2 is transmitted to the log information management server, and the print processing ends.

As described above, the print processing shown in Fig. 8 is characterized in that the content log for each page is accumulated in the log information management server 13 before print data of the page is outputted. Therefore, even in a case where the print processing is cut off short, the job tracking information accumulation in the log information management server 13 can be assured up until the page whose print data has been outputted on paper. However, depending on the network state, if the transmission speed from the client PC to the log information management server 13 is slow, it may take a long time until the print data is outputted on paper. In the procedure shown in Fig. 8, job log information transmission and print data transmission are performed in parallel.

Fig. 9 shows print processing where accumulation of partial job tracking information is prioritized. In step S91 in Fig. 9, job log 1 is extracted by the printer driver 502 in accordance with a printing content that has been designated by the application. In step S92, the extracted job log 1 is transferred to the driver agent 501 and stored in the temporary storage folder 506 shown in Fig. 5. In step S93, the stored job log 1 is immediately transmitted from the driver agent 501 to the log information management server 13 through the LAN I/F 27 in Fig. 4.

In step S94, the printer driver 502 generates print data of the first page. In step S95, the content log is extracted by the printer driver 502 in accordance with the print data of the first page. In step S96, the extracted content log is transferred to the driver agent 501 and stored in the temporary storage folder 506. After the content log is stored, in step S97 the print data is outputted to the printer 12. In step S98, it is determined whether or not the target page is the last page, and if not, the control returns to step S94. The processing from steps S94 to S98 are repeated, and when the determination in step S98 finds the last page, the control proceeds to step S99.

In step S99, the driver agent 501 transmits the content logs of all pages included in the target print job, which have been stored in step S96, to the log information management server 13. In step S910, job log 2 is extracted by the printer driver 502 in accordance with the print result. In step S911, the extracted job log 2 is transferred to the driver agent 501 and stored in the temporary storage folder 506. In step S912, the stored job log 2 is transmitted to the log information management server 13, and the print processing ends.

As described above, in the print processing shown in Fig. 9, at least the job log 1 is transmitted and accumulated in the log information management server 13 before the print data is outputted on paper. Therefore, the system administrator can keep track of information at least as to the when, where, and who.

According to the procedure in Fig. 9, since only the job log is transmitted before print data is outputted on paper, even if the network state is poor, the paper outputting time is relatively unaffected. In the procedure in Fig. 9, job log transmission is performed by dividing it into job logs 1 and 2, and the print data is outputted in between. In other words, job log information transmission and print data transmission are performed in parallel also in the procedure in Fig. 9.

Fig. 10 shows print processing where printing performance is prioritized. In step S101 in Fig. 10, job log 1 is extracted by the printer driver 502 in accordance with a printing content that has been designated by the application. In step S102, the extracted job log 1 is transferred to the driver agent 501 and stored in the temporary storage folder 506 shown in Fig 5.

In step S103, the printer driver 502 generates print data of the first page. In step S104, the content log is extracted by the printer driver 502 in accordance with the print data of the first page. In step S105, the extracted content log is transferred to the driver agent 501 and stored in the temporary storage folder 506. After the content log is stored, in step S106 the print data is outputted to the printer 12. In step S107, it is determined whether or not the target page is the last page, and if not, the control returns to step S103. The processing from steps S103 to S107 are repeated, and when the determination in step S107 finds the last page, the control proceeds to step S108.

In step S108, the driver agent 501 transmits the job log 1 of the target print job, which has been stored in step S102, to the log information management server 13. In step S109, the content logs of all pages included in the target print job, which have been stored in step S105, are transmitted to the log information management server 13. In step S1010, job log 2 is extracted by the printer driver 502 in accordance with the print result. In step S1011, the extracted job log 2 is transferred to the driver agent 501 and stored in the temporary storage folder 506. In step S1012, the stored job log 2 is transmitted to the log information management server 13, and the print processing ends.

As described above, the print processing shown in Fig. 10 is characterized in that all job tracking information is transmitted and accumulated in the log information management server 13 after the print data is outputted on paper. Therefore, printing does not delay due to a delay in the log information transmission through a network, and thus a good printing performance can be maintained. In other words, this processing can prevent a printing delay caused by poor communication state. In a case where the client PC turns off its power immediately after the print data is outputted on paper, the job tracking information is transmitted when the client PC is started up next.

As described above, in the print processing according to the present embodiment, a user is able to designate whether to prioritize print processing or log recording. In accordance with the designation, the printer driver switches the log information transmission timing. As a result, printing prioritized processing or log-recording prioritized processing can be switched.

### [Modified Embodiment]

Furthermore, in a case where a user turns off the client PC's power immediately after the print data is outputted on paper, normally the unsent content log and job log 2 are transmitted immediately when the client PC is started up next. Unless the unsent job tracking information which remains stored in the client PC is somehow deleted by a malicious user, the job tracking information as well as printing content are accumulated in the log information management server 13.

Note that in the case of Fig. 9 or 10, in order to protect the job tracking information which is transmitted after the print data is outputted on paper, it is possible to limit accessing the folder, where the job tracking information is temporarily stored, to the access with an administrative right only and not give any administrative right to general users. Further, it is also possible to encrypt the temporary-stored job tracking information.

### [Second Embodiment]

The first embodiment has described a case where the print processes shown in Figs. 8, 9 and 10 are manually switched by the administrator. The second embodiment describes a method of automatically executing the switching.

The automatic switching is executed by the driver agent 501 in the client PC 11. It may also be executed by the printer driver 502. In other words, the driver agent 501 or printer driver 502 serves as the log controlling means which controls log information transmission. In either case, a selected processing identifier is transmitted to the printer driver 502 and stored. The printer driver 502 specifies the selected processing from print processes 1 to 3 (Figs. 8 to 10), which has been designated by the stored processing identifier, and executes the process. Assume that the execution timing of the automatic switching can be set at, e.g., the start-up of the client PC 11, or regular time intervals, by the management application program in the log information management server 13.

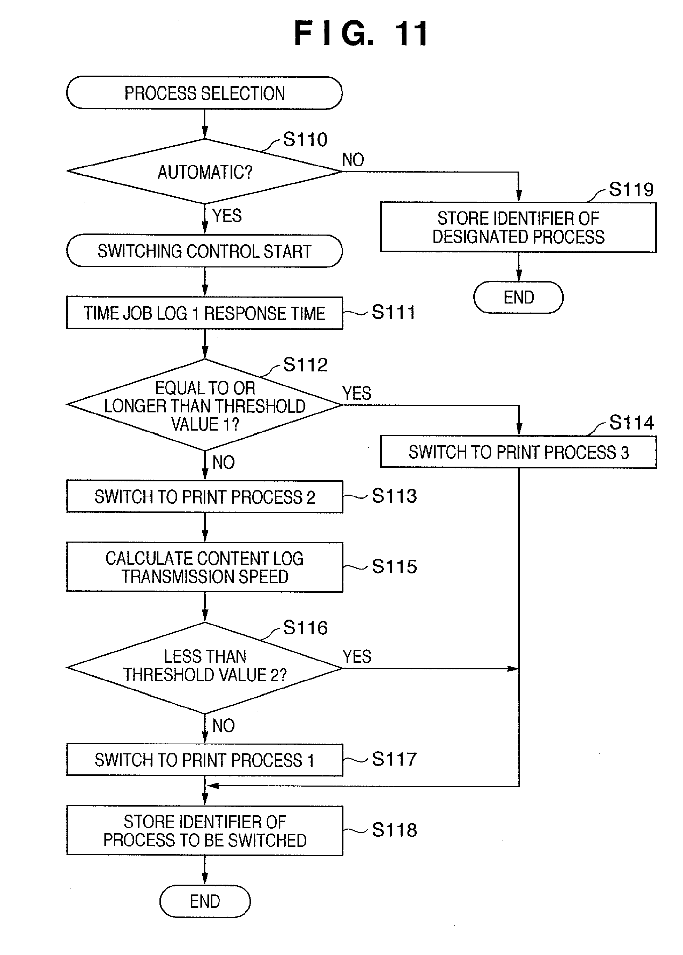

Fig. 11 shows a procedure in which process switching is performed in accordance with response time of the log information management apparatus. In step S110 in Fig. 11, it is determined whether or not the process switching is to be performed automatically. The determination criterion is the selection value inputted (automatically or manually) by, for instance, a user from a user interface of a printer driver or the like. If the processing switching is to be performed automatically, the control proceeds to step S111.

In step S111, for instance, the driver agent 501 transmits job log 1 and times how long it takes for the log information management server to return a response of job log reception completion. To time the response time, for instance, response time obtained in ten times of print processing are averaged. In other words, it adopts average response time obtained when a given amount of log information is transmitted to the log information management apparatus a predetermined number of times. If the data size is large, the response time becomes long even if the communication speed is constant. Therefore, it is preferable that the size of job log information be constant when the response time is obtained (according to the content of the job log information, the size is substantially constant). Therefore, in step S112, whether or not the calculated response time is equal to or longer than a threshold value 1 (first reference value) is checked. In other words, whether or not the average response time is equal to or longer than the first reference value is tested. If the response time is less than the first reference value, it is decided that prioritizing the accumulation of partial job tracking information does not affect printing performance. In step S113, the control switches to print process 2 (Fig. 9). Switching the process means to store the processing identifier indicative of process 2 in a predetermined storage area. Meanwhile, if the response time is equal to or longer than the threshold value 1, it is decided that the network state is poor. In step S114, the control switches to print process 3 (Fig. 8), and the switching process ends. Switching the process means to store the processing identifier indicative of process 3 in a predetermined storage area. Since the data size of the job log 1 is substantially constant, a fixed value, e.g., one second, is predetermined for the threshold value 1.

In step S115, the content log transmission speed is calculated. The transmission speed is calculated based on the data size of the content log and the time from which the driver agent 501 transmits the content log until which the log information management server 13 returns a response of content log reception completion. The obtained value is a so-called throughput. In this calculation also, transmission speed obtained in, for instance, ten times of print processing are averaged. In step S116, whether or not the calculated transmission speed is less than a threshold value 2 (second reference value) is checked. If the transmission speed is equal to or higher than the threshold value 2 (second reference value), it is decided that prioritizing the accumulation of all job tracking information does not affect printing performance. In step S117, the control switches to print process 1, and the switching process ends. Switching the process means to, for example, store the processing identifier indicative of print process 1 in a predetermined storage area. If the transmission speed is less than the threshold value 2 (second reference value), print process 2 remains and the switching process ends. Note that in a case where the process is switched based on response time also for the content log, since the threshold value 2 is time, print process 2 is selected when the response time is equal to or longer than the threshold value 2, whereas print process 1 is selected when the response time is less than the threshold value 2.

After a processing identifier is decided in the above-described manner, one of the print processes 1 to 3 (Figs. 8 to 10) is executed in accordance with the identifier.

Note that it is preferable that the threshold values 1 and 2 be variable by, e.g., the management application program.

Note in step S116, the determination with respect to the content log may be made based on response time. In this case, a fixed size of content log is transmitted to the log management server 13 to time the response time. Since the response time enables to obtain the time including a delay in the server, it can be considered that the response time better reflects the network state than the transmission speed. Conversely, the determination in step S112 may be made based on transmission speed.

As described above, print job processing can be performed in accordance with the network state; printing is prioritized if the communication state is poor, while log information recording is prioritized if the communication state is good.

### [Third Embodiment]

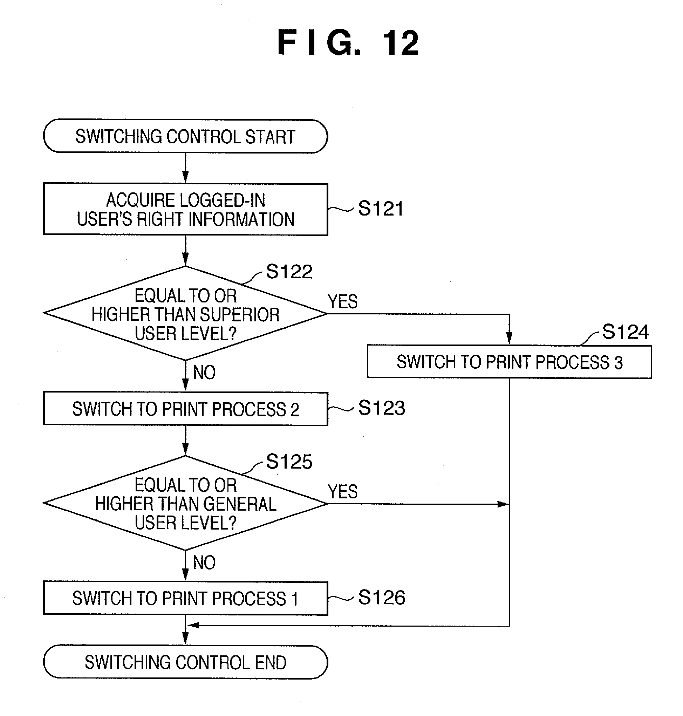

Fig. 12 shows a procedure of driver agent in which process switching is performed in accordance with a logged-in user's right. Note that in a case where a computer is shared by plural numbers of people, switching may be performed, not in accordance with the logged-in user's right, but in accordance with the right of the user who is the owner of a print job being processed.

It is preferable that steps S110 and S119 be executed before step S121 in Fig. 12. However, this process is not shown in Fig. 12.

In step S121, information indicative of a level of the logged-in user's right is acquired. For instance, user's right levels include an administrator level, a superior user level, a general user level, a guest user level and so on. The user's right level can be acquired from a function provided by the OS. In step S122, it is determined whether or not the acquired user's right level is equal to or higher than the first reference level (first level), e.g., the superior user level. If NO, in other words, if the acquired user's right level is less than the first level, accumulation of partial job tracking information is prioritized since monitoring is highly required. For this, the process is switched to print process 2 (Fig. 9) in step S123. Herein switching the process means to store the processing identifier indicative of print process 2 in a predetermined storage area. Meanwhile, if the user's right level is equal to or higher than the superior user level (i.e., equal to or higher than the first reference level, e.g., a superior user or administrator level), the process is switched to print process 3 (Fig. 8) in step S124 since the necessity of monitoring is low, and the switching control ends. Herein switching the process means to store the processing identifier indicative of print process 3 in a predetermined storage area.

Next in step S125, it is determined whether or not the user's right level is equal to or higher than a general user level (second level). If NO (in other words, a guest user), it is decided that monitoring is highly required because of its narrow scope of right, and the process is switched to print process 1 in step S126, then the switching control ends. Herein, switching the process means to store the processing identifier indicative of print process 1 in a predetermined storage area. Meanwhile, if the user's right level is equal to or higher than a general user level, print process 2 is kept and the switching control ends.

At the time of actual printing, print processes 1 to 3 (Figs. 8 to 10) are executed in accordance with the processing identifier.

In the foregoing manner, log information transmission timing can be switched based on the user's right. By virtue of this processing, when a print job is processed, printing is prioritized if the user has a large scope of right, while log information recording is prioritized if the user has a small scope of right.

Note that the present invention can be applied to a system constituted by a plurality of devices (e.g., host computer, interface, reader, printer) or to an apparatus comprising a single device (e.g., copying machine, facsimile machine). Further, the object of the present invention can also be achieved by providing a recording medium recording program codes for realizing the functions of the above-described embodiments to a computer system or apparatus, reading the program codes stored in a storage medium by a computer of the system or apparatus, then executing the program. In this case, the program codes read from the storage medium realize the functions according to the embodiments, and the program codes and the storage medium storing the program codes constitute the invention.

Furthermore, the present invention also includes a case where an OS (operating system) or the like working on the computer performs part or the entire processes in accordance with designations of the program codes and realizes functions according to the above embodiments. Furthermore, the present invention is also applicable to a case where the program codes read from the storage medium are written in a function expansion card which is inserted into the computer or in a memory provided in a function expansion unit which is connected to the computer. In this case, a CPU or the like contained in the function expansion card or unit performs part or the entire processes in accordance with designations of the program codes and realizes functions of the above embodiments.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions. In a print log management system including a client which generates log information, printing prioritized processing or log-recording prioritized processing is switched in accordance with network performance. A driver agent transmits job log 1 to a server to time the response time, and compares the obtained response time with threshold value 1. If the response time is equal to or longer than threshold value 1, printing performance is prioritized and the control is switched to process 3, in which log information is transmitted after the printing is completed. If the response time of job log 1 is less than threshold value 1 and content log transmission speed is equal to or higher than threshold value 2, the control is switched to process 2 in which only job log 1 is transmitted before printing is executed. If the content log transmission speed is less than threshold value 2, the control is switched to process 1 in which the content log of the print data is transmitted each time a page is outputted.

## Claims

1. An information processing apparatus in a print log management system which manages log information of a print job by a log information management apparatus, comprising:
log generation means for generating log information of a print job based on print data;
log transmission means for transmitting the log information to the log information management apparatus; and
log control means for, in a case where response time of the log information management apparatus is equal to or longer than a first reference value, transmitting the log information from said log transmission means after an output of the print data is completed, whereas in a case where the response time is less than the first reference value, transmitting at least part of the log information from said log transmission means in parallel with an output of the print data.

2. The information processing apparatus according to claim 1, wherein said log control means further determines whether or not the response time is equal to or longer than a second reference value, and in a case where the response time is less than the first reference value and is equal to or longer than the second reference value, said log control means transmits first job log information which includes information indicative of an originator and owner of the print job in parallel with an output of the print data and transmits other log information after the output of the print data is completed, whereas in a case where the response time is less than the second reference value, said log control means transmits the log information in parallel with the output of the print data.

3. The information processing apparatus according to claim 1 or 2, wherein said response time is average response time obtained when a constant amount of log information is transmitted to the log information management apparatus.

4. The information processing apparatus according to claim 1 or 2, wherein in a case where a logged-in user's right level is equal to or higher than a first level, regardless of the response time said log control means transmits the log information from said log transmission means after an output of the print data is completed, whereas in a case where the user's right level is less than the first level, said log control means transmits at least part of the log information from said log transmission means in parallel with an output of the print data.

5. The information processing apparatus according to claim 4, wherein said log control means further determines whether or not the user's right level is equal to or higher than a second level, and in a case where the user's right level is less than the first level and is equal to or higher than the second level, said log control means transmits the first job log information which includes information indicative of an originator and owner of the print job in parallel with an output of the print data and transmits other log information after the output of the print data is completed, whereas in a case where the user's right level is less than the second level, transmits the log information in parallel with the output of the print data.

6. The information processing apparatus according to claim 1, wherein said log generation means generates first job log information which includes information indicative of an originator and owner of the print job, content log information which includes information indicative of a content of print data for each page, and second job log information which includes information indicative of a print result,
in a case where the content log information is transmitted in parallel with an output of the print data, said log control means executes, page by page, print data output and content log transmission of a page, and
in a case where the content log information is transmitted after an output of the print data is completed, said log control means executes content log transmission of all pages after the output of the print data is completed for all pages of the print job.

7. A control method of an information processing apparatus in a print log management system which manages log information of a print job by a log information management apparatus, comprising:
a log generation step of generating log information of a print job based on print data; and
a log control step of, in a case where response time of the log information management apparatus is equal to or longer than a first reference value, the log information is transmitted to the log information management apparatus after an output of the print data is completed, whereas in a case where the response time is less than the first reference value, at least part of the log information is transmitted to the log information management apparatus in parallel with an output of the print data.

8. The control method of an information processing apparatus according to claim 7, wherein in said log control step, whether or not the response time is equal to or longer than a second reference value is further determined, and in a case where the response time is less than the first reference value and is equal to or longer than the second reference value, first job log information which includes information indicative of an originator and owner of the print job is transmitted in parallel with an output of the print data and other log information is transmitted after the output of the print data is completed, whereas in a case where the response time is less than the second reference value, the log information is transmitted in parallel with the output of the print data.

9. The control method of an information processing apparatus according to claim 7 or 8, wherein in a case where a logged-in user's right level is equal to or higher than a first level, in said log control step, regardless of the response time the log information is transmitted to the log information management apparatus after an output of the print data is completed, whereas in a case where the user's right level is less than the first level, at least part of the log information is transmitted to the log information management apparatus in parallel with an output of the print data.

10. The control method of an information processing apparatus according to claim 9, wherein in said log control step, whether or not the user's right level is equal to or higher than a second level is further determined, and in a case where the user's right level is less than the first level and is equal to or higher than the second level, the first job log information which includes information indicative of an originator and owner of the print job is transmitted in parallel with an output of the print data and other log information is transmitted after the output of the print data is completed, whereas in a case where the user's right level is less than the second level, the log information is transmitted in parallel with the output of the print data.

11. A computer readable medium storing a program which causes a computer to execute each of the steps in the method described in claim 7.
